# FASCICULE DE BREVET EUROPEEN

(11) **EP 1 224 756 B1**
(45) Date de publication et mention de la délivrance du brevet: **09.04.2008**
(21) Numéro de dépôt: 00993672.5
(22) Date de dépôt: 26.12.2000
(51) Int. Cl.: H04B 10/18

(54) **MODULATION DE PHASE ALTERNEE POUR DES TRANSMISSIONS RZ OPTIQUES NON-SOLITONS**
ALTERNIERENDE PHASENMODULATION FÜR NICHT-SOLITON RZ OPTISCHE ÜBERTRAGUNG
ALTERNATE PHASE MODULATION FOR NON-SOLITON OPTICAL RZ TRANSMISSION

(30) Priorité: 27.12.1999 FR 9916525
(43) Date de publication de la demande: 24.07.2002
(73) Titulaire: Alcatel Lucent, 75008 Paris (FR)
(72) Inventeur: MARCEROU, Jean-François, F-91100 Corbeil Essonnes (FR); CHESNOY, José, F-75014 Paris (FR)
(74) Mandataire: Shamsaei Far, Hassan
(86) Numéro de dépôt international: PCT/FR2000/003680
(87) Numéro de publication internationale: WO 2001/048955

(56) Documents cités:
- WO-A-92/07430
- WO-A-95/04952

## Description

L'invention concerne les systèmes de transmission par fibre optique, et plus précisément les systèmes de transmission utilisant des signaux RZ non solitons.

De façon largement connue en soi, pour des valeurs binaires, on appelle transmission RZ les régimes de transmission dans lesquels les "1" sont codés par des impulsions présentant une amplitude nulle au début et à la fin du temps bit. On distingue habituellement parmi des transmissions RZ les régimes de transmission par signaux solitons des autres régimes de transmission. Les impulsions solitons ou solitons sont des impulsions RZ de largeur temporelle faible par rapport au temps bit, qui présentent une relation déterminée entre la puissance, la largeur spectrale et la largeur temporelle, et qui de ce fait se propagent généralement dans la partie à dispersion dite anormale d'une fibre optique. L'évolution de l'enveloppe d'une telle impulsion soliton dans une fibre monomode peut être modélisée par l'équation de Schrödinger non linéaire; la propagation repose sur un équilibre entre la dispersion anormale de la fibre et sa non-linéarité.

Des solitons voisins interagissent de façon non-linéaire, comme décrit par F. M. Mitschke et L. F. Mollenauer, Optics Letters, vol. 12 no 5 pages 355-357. Cette interaction se traduit par une attraction entre des solitons voisins, en l'absence de modulation, i. e. pour des solitons en phase. Elle se traduit par une répulsion entre des solitons voisins en opposition de phase. N. J. Smith et al., Optics Letters vol. 19 no 1, pages 16-18 présente cette interaction comme une des contraintes majeures dans la conception de systèmes de communication à fibres optiques par solitons.

FR-A-2 754 963 (référence interne 100229) propose d'exploiter cette interaction non-linéaire entre solitons voisins, pour transmettre une horloge. Ce document propose de transmettre une suite ininterrompue de solitons, d'une largeur comprise entre 0,20 et 0,33 % du temps bit. La borne inférieure de cette plage assure que l'interaction entre un soliton et ses deux voisins compense les effets de la gigue de Gordon-Haus, tandis que la borne supérieure assure que les impulsions transmises se comportent comme des solitons. Dans ce document, il est proposé de transmettre des solitons en phase, ou des solitons avec des phases alternées, pour exploiter l'attraction ou la répulsion entre deux solitons voisins.

D. Le Guen et autres, Narrow band 1.02 Tbit/s (51x20 Gbit/s) soliton DWDM transmission over 1000 km of standard fiber with 100 km amplifier spans, OFC'99, PD4, décrit une expérience de transmission de signaux solitons gérés en dispersion, dans laquelle les signaux sont multiplexés en temps et en polarisation.

Il a par ailleurs été proposé d'utiliser une modulation duobinaire pour des transmissions en régime NRZ. S. Walklin et J. Conradi, On the relationship between chromatic dispersion and transmitter filter response in duobinary optical communication systems, IEEE Photonics Technology Letters, vol. 9 no. 7 (1997), pp. 1005-107 discute des contraintes de bandes passantes dans de tels systèmes. Il est mentionné dans cet article différents types de modulation duobinaires. Une modulation possible est générée en appliquant un signal électrique à trois états à l'entrée RF d'un modulateur Mach-Zender polarisé à l'extinction maximale, c'est-à-dire à Vπ. Il en résulte un signal optique binaire modulé en intensité, avec un déphasage de n entre les deux états d'intensité non nulle. Un tel signal duobinaire parfait ne résiste pas à la dispersion, comme indiqué dans D. Penninckx et autres, Effect of electrical filtering of duobinary signals on the chromatic dispersion transmission limitations, ECOC'98, pp. 537-538.

Le document WO 92/07430 divulgue un système de communication qui propose l'utilisation des impulsions avec une largeur au moins de 20 % de la période de bit. Selon la solution proposée par ce document, le choix des largeurs d'impulsion est réalisé selon le débit binaire et la dispersion du système afin d'obtenir de plus grandes distances de la propagation d'impulsion.

Le document WO 95/04952 divulgue une méthode de propagation des solitons optiques dans lesquels une modulation positive de phase est imposée aux solitons après qu'ils aient propagé au moins 30 kilomètres le long d'un chemin optique de transmission par fibres optiques, la quantité de modulation de phase imposé étant suffisante pour maintenir la séparation temporelle entre les solitons adjacents de sorte que des interactions significatives de soliton-soliton soient évitées

L'invention a pour objet le problème des limitations induites dans les systèmes de transmission RZ par les interactions entre les impulsions. Elle propose une solution simple pour limiter l'effet des interactions. L'invention s'applique aux signaux RZ, et plus spécifiquement aux signaux RZ non-solitons.

Plus spécifiquement, l'invention propose un train d'impulsions RZ non-solitons, dans lequel la différence de phase entre la fin d'une impulsion et le début de l'impulsion suivante est comprise entre 2π/3 et 4π/3.

Dans un mode de réalisation, chaque impulsion présente une phase constante.

Dans un autre mode de réalisation, la phase varie entre le début d'une impulsion et la fin de l'impulsion. Dans ce cas, la variation de phase dans une impulsion peut être sinusoïdale ou carrée.

De préférence, le train est modulé.

L'invention concerne aussi un procédé de transmission d'un tel train d'impulsions à phases constantes, comprenant l'émission d'impulsions, et l'inversion de la phase d'une impulsion à chaque nouvelle impulsion.

Elle concerne encore un procédé de transmission d'un tel train d'impulsions à phase modulée dans une impulsion, comprenant l'émission d'impulsion et l'application d'une modulation de phase sur chaque impulsion.

L'invention propose aussi un train d'impulsions RZ non-solitons, dans lequel la différence de phase entre la fin d'une impulsion et le début d'une l'impulsion immédiatement suivante est comprise entre 2π/3 et 4π/3.

Dans un mode de réalisation, chaque impulsion présente une phase constante. Dans ce cas, il est avantageux que la différence entre la phase d'une impulsion d'ordre pair et la phase d'une impulsion d'ordre impair soit comprise entre 2π/3 et 4π/3.

L'invention concerne enfin un procédé de transmission d'un tel train d'impulsions, comprenant l'émission d'un train d'impulsions à fréquence moitié avec une première phase, l'émission d'un train d'impulsion à fréquence moitié avec une deuxième phase, et l'entrelacement des deux trains à fréquence moitié.

D'autres caractéristiques et avantages de l'invention apparaîtront à la lecture de la description qui suit de modes de réalisation de l'invention, données à titre d'exemple uniquement.

L'invention propose, pour diminuer les effets des interactions linéaires et non-linéaires entre les impulsions RZ non-solitons, d'inverser la phase entre la fin d'une impulsion et le début de l'impulsion suivante.

Dans la suite de la description, l'invention est décrite dans divers modes de réalisation, dans le cas préféré où la différence de phase entre la fin d'une impulsion et l'impulsion suivante est de n. Cette valeur permet de diminuer autant que possible l'interaction entre des impulsions voisines. L'invention n'est toutefois pas limitée à cette valeur, et s'applique lorsque la différence de phase est comprise entre 2n/3 et 4π/3.

Dans un premier mode de réalisation, l'inversion de la phase entre la fin d'une impulsion et l'impulsion suivante est obtenue en appliquant à chaque impulsion RZ une phase qui est inverse de la phase de l'impulsion précédente. Ce mode de réalisation peut par exemple être mis en oeuvre dans à l'émission à l'aide des dispositifs connus pour la modulation duobinaire, tel le modulateur Mach-Zender polarisé à l'extinction maximale décrit dans l'article de Walklin mentionné plus haut. Dans un tel cas, le signal électrique à trois états peut être obtenu à partir de la séquence de bits à envoyer en inversant le signe d'un "1" sur deux; dans ce cas, l'inversion de phase entre des impulsions n'est pas un simple multiplexage temporel de la phase, car elle ne dépend pas de la position temporelle des impulsions, mais simplement de la séquence des impulsions reçues. Autrement dit, la phase d'une impulsion ne dépend pas de l'instant auquel elle est émise - par exemple de la parité ou non de la fenêtre temporelle - mais de la phase de l'impulsion précédente.

Dans un deuxième mode de réalisation, chaque impulsion est modulée en phase, de sorte à ce que la phase du début de l'impulsion soit inverse de la phase à la fin de l'impulsion. Cette modulation de phase de chaque impulsion peut être une modulation de phase sinusoïdale, ou encore une modulation de phase avec un signal carré. Dans le premier cas, la phase varie continûment entre des valeurs distinctes de π; dans le deuxième cas, la phase varie brutalement, de préférence au voisinage du milieu de l'impulsion. Dans ce mode de réalisation aussi, l'inversion de phase n'est pas un simple multiplexage en phase.

Dans un troisième mode de réalisation, on génère les signaux RZ à partir de deux trains d'impulsions qui sont entrelacés. Les impulsions du premier train présentent une phase identique qui est inverse de la phase commune des impulsions du deuxième train. Ce troisième mode de réalisation assure une inversion de la phase entre deux impulsions qui se suivent immédiatement, mais pas nécessairement entre deux impulsions séparées par un zéro. De ce point de vue, le troisième mode de réalisation est moins avantageux que le premier et le second modes de réalisation; on notera toutefois que l'interaction non-linéaire entre les impulsions est aussi fonction de la distance temporelle entre les impulsions. De ce point de vue, l'interaction entre deux impulsions séparées par un zéro est moins gênante en transmission que l'interaction entre deux impulsions immédiatement voisines, c'est-à-dire dans des fenêtres temporelles adjacentes.

Dans un quatrième mode de réalisation, l'inversion de la phase entre la fin d'une impulsion et l'impulsion suivante est obtenue comme dans le premier mode de réalisation; toutefois, le signal électrique à trois états est obtenu à partir de la séquence de bits à envoyer en inversant le signe des "1" en fonction de leur position dans la séquence de bits; dans ce cas, comme dans le troisième mode de réalisation, un "1" présente une phase qui est fonction non pas de la phase du "1" précédent, mais sa position temporelle.

L'invention, dans tous les modes de réalisation, permet de réduire les interactions linéaires ou non-linéaires entre les impulsions RZ; pour ce qui est des interactions linéaires, c'est-à-dire des interactions entre les impulsions voisines du fait de la dispersion, l'invention assure que les interférences entre deux impulsions voisines sont destructrices. Corrélativement, l'invention permet dans un système de transmission d'augmenter la distance de transmission, ou à distance égale d'améliorer les caractéristiques du système de transmission. L'invention est particulièrement avantageuse dans le cas de systèmes de transmission sur grandes distances, typiquement au-delà de 3 ou 4 Mm, comme les systèmes de transmission sous-marins. De fait, les distances de propagation dans de tels systèmes sont favorisent l'accumulation des effets linéaires et non-linéaires, et notamment des interactions entre impulsions voisines.

Dans la description qui précède, on a décrit l'invention pour des impulsions RZ non-solitons. On entend par signaux optiques non-solitons, des signaux présentant une ou plusieurs des caractéristiques suivantes: largeur temporelle (FWHM) importante par rapport au temps bit, i.e. supérieure à environ 30 à 40% de celui-ci; absence de relation déterminée entre la puissance, la largeur spectrale et la largeur temporelle (en fait la puissance pour les impulsions non-solitons est inférieure à la puissance donnés par la relation de propagation "soliton"); pas d'équilibre entre la dispersion et la non-linéarité au cours de la propagation.

L'invention diffère de la solution proposée dans FR-A-2 754 963 en ce que les impulsions ne sont pas des impulsions solitons; l'inversion de phase selon l'invention fait diminuer les interactions entre les impulsions voisines; en outre, l'invention ne s'applique pas à une horloge - un train de bits à "1" - mais à des signaux modulés. Un autre effet de l'invention est d'assurer que d'éventuelles interférences entre des impulsions voisines sont destructrices, ce qui évite le groupage éventuel d'impulsions à la réception.

## Revendications

1. Un train d'impulsions RZ non-solitons, **caractérisé en ce que** la différence de phase entre la fin d'une impulsion et le début de l'impulsion suivante est comprise entre 2π/3 et 4π/3.

2. Le train de la revendication 1, **caractérisé en ce que** chaque impulsion présente une phase constante.

3. Le train de la revendication 1, **caractérisé en ce que** la phase varie entre le début d'une impulsion et la fin de l'impulsion.

4. Le train de la revendication 3, **caractérisé en ce que** la variation de phase dans une impulsion est sinusoïdale.

5. Le train de la revendication 4, **caractérisé en ce que** la variation de phase dans une impulsion est carrée.

6. Le train de l'une des revendications 1 à 5, **caractérisé en ce qu'**il est modulé.

7. Un train d'impulsions RZ non-solitons, **caractérisé en ce que** la différence de phase entre la fin d'une impulsion et le début de l'impulsion immédiatement suivante est comprise entre 2π/3 et 4π/3.

8. Le train de la revendication 7, **caractérisé en ce que** chaque impulsion présente une phase constante.

9. Le train de la revendication 8, **caractérisé en ce que** la différence entre la phase d'une impulsion d'ordre pair et la phase d'une impulsion d'ordre impair est comprise entre 2π/3 et 4π/3.

10. Un procédé de transmission d'un train d'impulsions selon la revendication 2, comprenant l'émission d'impulsions, et l'inversion de la phase d'une impulsion à chaque nouvelle impulsion.

11. Un procédé de transmission d'un train d'impulsions selon la revendication 3, 4 ou 5, comprenant l'émission d'impulsion et l'application d'une modulation de phase sur chaque impulsion.

12. Un procédé de transmission d'un train d'impulsions selon la revendication 7, 8 ou 9, comprenant l'émission d'un train d'impulsions à fréquence moitié avec une première phase, l'émission d'un train d'impulsions à fréquence moitié avec une deuxième phase, et l'entrelacement des deux trains à fréquence moitié.

## Claims

1. A stream of non-soliton RZ pulses, **characterised in that** the phase difference between the end of one pulse and the beginning of the next pulse is in the range from 2π/3 to 4π/3.

2. The pulse stream of claim 1, **characterised in that** each pulse has a constant phase.

3. The pulse stream of claim 1, **characterised in that** the phase varies between the beginning of a pulse and the end of the pulse.

4. The pulse stream of claim 3, **characterised in that** the phase variation in a pulse is sinusoidal.

5. The pulse stream of claim 4, **characterised in that** the phase variation in a pulse is a squarewave.

6. The pulse stream of one of claims 1 to 5, **characterised in that** it is modulated.

7. A stream of non-soliton RZ pulses, **characterised in that** the phase difference between the end of a pulse and the beginning of the immediately following pulse is in the range from 2π/3 to 4π/3.

8. The pulse stream of claim 7, **characterised in that** each pulse has a constant phase.

9. The pulse stream of claim 8, **characterised in that** the difference between the phase of an even-numbered pulse and the phase of an odd-numbered pulse is in the range from 2π/3 to 4π/3.

10. A method of transmitting a stream of pulses according to claim 2, including sending the pulses and reversing the phase of each new pulse.

11. A method of transmitting a stream of pulses according to claim 3, 4 or 5, including sending the pulses and phase modulating each pulse.

12. A method of transmitting a stream of pulses according to claim 7, 8 or 9, including sending a stream of pulses at half the pulse frequency with a first phase, sending a stream of pulses at half the pulse frequency with second phase, and interleaving the two streams of pulses at half the pulse frequency.

## Patentansprüche

1. Eine nicht-Soliton RZ-Impulskette, **dadurch gekennzeichnet, dass** die Phasendifferenz zwischen dem Ende eines Impulses und dem Anfang des folgenden Impulses zwischen 2π/3 und 4π/3 beträgt.

2. Die Kette aus Anspruch 1, **dadurch gekennzeichnet, dass** jeder Impuls eine konstante Phase aufweist.

3. Die Kette aus Anspruch 1, **dadurch gekennzeichnet, dass** die Phase zwischen dem Anfang eines Impulses und dem Ende des Impulses schwankt.

4. Die Kette aus Anspruch 3, **dadurch gekennzeichnet, dass** die Phasenschwankung in einem Impuls sinusförmig ist.

5. Die Kette aus Anspruch 4, **dadurch gekennzeichnet, dass** die Phasenschwankung in einem Impuls rechteckig ist.

6. Die Kette aus einem der Ansprüche 1 bis 5, **dadurch gekennzeichnet, dass** sie moduliert ist.

7. Eine nicht-Soliton RZ-Impulskette, **dadurch gekennzeichnet, dass** die Phasendifferenz zwischen dem Ende eines Impulses und dem Anfang des unmittelbar darauf folgenden Impulses zwischen 2π/3 und 4π/3 beträgt.

8. Die Kette aus Anspruch 7, **dadurch gekennzeichnet, dass** jeder Impuls eine konstante Phase aufweist.

9. Die Kette aus Anspruch 8, **dadurch gekennzeichnet, dass** die Differenz zwischen der Phase eines geradzahligen Impulses und der Phase eines ungeradzahligen Impulses zwischen 2π/3 und 4π/3 beträgt.

10. Ein Übertragungsverfahren für eine Impulskette gemäß Anspruch 2, das das Senden von Impulsen und die Phasenumkehr eines Impulses bei jedem neuen Impuls umfasst.

11. Ein Übertragungsverfahren für eine Impulskette gemäß Anspruch 3, 4 oder 5, das das Senden von Impulsen und die Anwendung einer Phasenmodulation auf jeden Impuls umfasst.

12. Ein Übertragungsverfahren für eine Impulskette gemäß Anspruch 7, 8 oder 9, das das Senden einer Halbfrequenz-Impulskette mit einer ersten Phase, das Senden einer Halbfrequenz-Impulskette mit einer zweiten Phase und die Verschachtelung der beiden Halbfrequenz-Ketten umfasst.
